# EUROPÄISCHE PATENTSCHRIFT

(11) **EP 2 523 533 B1**
(45) Veröffentlichungstag und Bekanntmachung des Hinweises auf die Patenterteilung: **30.09.2015**
(21) Anmeldenummer: 12004956.4
(22) Anmeldetag: 19.10.2009
(51) Int. Cl.: H05B 33/08

(54) **Betriebsschaltung für Leuchtdioden**
Operating circuit for light diodes
Circuit de ballast pour diodes luminescentes

(30) Priorität: 20.10.2008 AT 60008 U
(43) Veröffentlichungstag der Anmeldung: 14.11.2012
(62) Teilanmeldung aus: 09756235.9
(73) Patentinhaber: Tridonic GmbH & Co KG, 6850 Dornbirn (AT)
(72) Erfinder: Zimmermann, Michael, 8888 Heiligkreuz (CH); Barth, Alexander, 6861 Alberschwende (AT); Marent, Günter, 6781 Bartholomaeberg (AT); Mayerhofer, Markus, 6850 Dornbirn (AT)
(74) Vertreter: Banzer, Hans-Jörg

(56) Entgegenhaltungen:
- EP-A1- 0 735 801
- EP-A2- 0 948 241
- WO-A2-2004/006629
- DE-A1-102006 034 371

## Beschreibung

Die Erfindung betrifft eine Betriebsschaltung mit Leuchtdioden gemäß dem Oberbegriff des Patentanspruchs 1 und ein Verfahren zum Betreiben von Leuchtdioden gemäß dem Oberbegriff des Patentanspruchs 12.

### Technisches Gebiet

Halbleiterlichtquellen wie beispielsweise Leuchtdioden sind während der letzten Jahre für Beleuchtungsanwendungen zunehmend interessant geworden. Der Grund dafür liegt unter anderem darin, dass entscheidende technische Innovationen und große Fortschritte sowohl bei der Helligkeit als auch bei der Lichteffizienz (Lichtleistung pro Watt) dieser Lichtquellen erzielt werden konnten. Nicht zuletzt durch die vergleichsweise lange Lebensdauer konnten sich Leuchtdioden zu einer attraktiven Alternative zu herkömmlichen Lichtquellen wie Glüh- oder Gasentladungslampen entwickeln.

### Stand der Technik

Halbleiterlichtquellen sind aus dem Stand der Technik hinreichend bekannt und werden im folgenden als LED (light-emitting-diode) abgekürzt. Dieser Begriff soll im folgenden sowohl Leuchtdioden aus anorganischen Materialien als auch Leuchtdioden aus organischen Materialien umfassen. Es ist bekannt, dass die Lichtabstrahlung von LEDs mit dem Stromfluss durch die LEDs korreliert. Zur Helligkeitsregelung werden LEDs daher grundsätzlich in einem Modus betrieben, in dem der Stromfluss durch die LED geregelt wird.

In der Praxis werden zur Ansteuerung einer Anordnung von einer oder mehrerer LEDs vorzugsweise Schaltregler, beispielsweise Tiefsetzsteller (Step-Down oder Buck Converter) verwendet. Ein solcher Schaltregler ist beispielsweise aus der DE 10 2006 034 371 A1 bekannt, auf der der Oberbegriff der unabhängigen Ansprüche beruht. Dabei steuert eine Steuereinheit einen hochfrequent getakteten Schalter (beispielsweise einen Leistungstransistor) an. Im eingeschalteten Zustand des Schalters fließt Strom über die LED Anordnung und eine Spule, die dadurch aufgeladen wird. Die zwischengespeicherte Energie der Spule entlädt sich im ausgeschalteten Zustand des Schalters über die LEDs (Freilaufphase). Der Strom durch die LED Anordnung zeigt einen zickzackförmigen zeitlichen Verlauf: bei eingeschaltetem Schalter zeigt der LED-Strom eine ansteigende Flanke, bei ausgeschaltetem Schalter ergibt sich eine abfallende Flanke. Der zeitliche Mittelwert des LED-stroms stellt den Effektivstrom durch die LED-anordnung dar und ist ein Maß für die Helligkeit der LEDs. Durch entsprechende Taktung des Leistungsschalters kann der mittlere, effektive Strom geregelt werden.

Die Funktion des Betriebsgeräts ist nun, einen gewünschten mittleren Stromfluss durch die LEDs einzustellen und die zeitliche Schwankungsbreite des Stroms, bedingt durch das hochfrequente Ein- und Abschalten des Schalters (typischerweise im Bereich oberhalb von 10 kHz), möglichst gering zu halten.

Eine große Schwankungsbreite des Stroms (Helligkeit oder Rippel) wirkt sich besonders bei LEDs nachteilig aus, da mit Veränderung der Stromamplitude sich das Spektrum des emittierten Lichts verändern kann. Um das emittierte Lichtspektrum während des Betriebs möglichst konstant zu halten, ist es bekannt, bei LEDs für Helligkeitsregelungen nicht die Stromamplitude zu variieren, sondern ein sogenanntes PWM (pulse-width-modulation) - Verfahren anzuwenden.

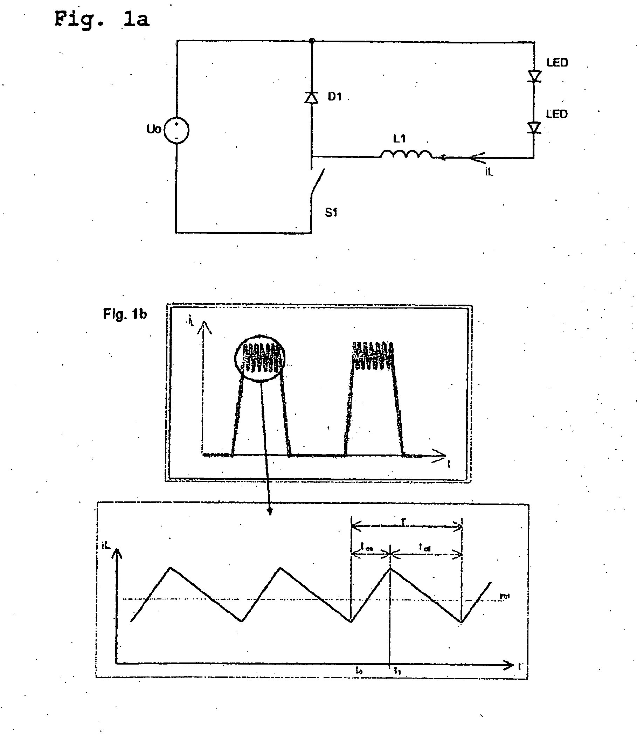

Dabei werden den LEDs durch das Betriebsgerät niederfrequente (typischerweise mit einer Frequenz im Bereich von 100-1000 Hz) Pulspakete mit (im zeitlichen Mittel) konstanter Stromamplitude zugeführt. Dem Strom innerhalb eines Pulspakets ist der oben angeführter hochfrequente Rippel überlagert. Die Helligkeit der LEDs kann nun durch die Frequenz der Pulspakete gesteuert werden; die LEDs können beispielsweise gedimmt werden, indem der zeitliche Abstand zwischen den Pulspaketen vergrößert wird.
Eine praktische Anforderung an das Betriebsgerät ist, dass es möglichst flexibel und vielseitig eingesetzt werden kann, beispielsweise unabhängig davon, wie viele LEDs als Last tatsächlich angeschlossen sind und betrieben werden sollen. Die Last kann sich zudem während des Betriebs ändern, wenn beispielsweise eine LED ausfällt.
Bei herkömmlichen Technologien werden die LEDs in einem sogenannten 'continuous conduction mode' bzw. nichtlückendem Betrieb betrieben.
Dieses Verfahren sei anhand von Figur 1a und Figur 1b näher erläutert (Stand der Technik).
Im in Figur 1a gezeigten Beispiel ist als Grundschaltung ein Tiefsetzsteller bzw. Buck-Converter für den Betrieb zumindest einer LED (oder mehrerer in Serie geschalteten LEDs) dargestellt, die einen ersten Schalter S1 aufweist. Die Betriebsschaltung wird mit einer Gleichspannung bzw. einer gleichgerichteten Wechselspannung U0 versorgt.
Im eingeschalteten Zustand des ersten Schalters S1 (während der Zeitdauer t_on) wird in der Spule L1 Energie aufgebaut, die sich im ausgeschalteten Zustand des ersten Schalters S1 (Zeitdauer t_off) über zumindest eine LED entlädt. Der sich ergebende zeitliche Stromverlauf ist in Figur 1b abgebildet (Stand der Technik). Dabei sind zwei Pulspakte des PWM dargestellt. Der Stromverlauf innerhalb eines Pulspakets ist zudem vergrößert dargestellt. Aus Gründen der Farbkonstanz soll innerhalb eines Pulspakets die Amplitude des Rippels möglichst gering sein.

Die EP 0 948 241 A2 offenbart eine Betriebsschaltung für ein Leuchtmittel, bei der ein Schalter für einen Grenzbetrieb zwischen lückendem und nicht lückendem Betrieb geschaltet wird, der auch als BCM ("boundary conduction mode") bezeichnet wird. Ein Strom wird durch eine induktiv mit einer Spule gekoppelte Wicklung überwacht.

Die EP 0 735 801 A1 offenbart eine Betriebsschaltung für eine Gasentladungslampe, die eine Pull-up-Schaltung umfasst, um eine über einen Spannungsteiler erfasste Spannung zu verschieben.

### Darstellung der Erfindung

Es ist die Aufgabe der vorliegenden Erfindung, eine gegenüber dem Stand der Technik verbesserte Betriebsschaltung für wenigstens eine LED und ein Verfahren zum Betrieb wenigstens einer LED bereitzustellen, welche auf einfache Art und Weise die Konstanthaltung des Stroms und somit der LED-Leistung ermöglicht.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Gemäß einem ersten Aspekt der Erfindung wird der Betriebsschaltung für wenigstens eine LED eine Gleichspannung oder gleichgerichtete Wechselspannung zugeführt. Vorzugsweise wird mittels einer Spule und einem durch eine Steuer/Regeleinheit getakteten ersten Schalter eine Versorgungsspannung für wenigstens eine LED bereitstellt, wobei bei eingeschaltetem ersten Schalter in der Spule eine Energie zwischengespeichert wird, die sich bei ausgeschaltetem ersten Schalter über eine Diode und über der wenigstens eine LED entlädt.
Bei der erfindungsgemäßen Schaltung bestimmt die Steuereinheit die Zeitdauer toff zwischen einem Ausschalten und einem folgenden Einschalten des ersten Schalters abhängig von der Spannung über der Spule.
Die Steuereinheit bestimmt die Spannung über der Spule mittels einer induktiv an die Spule gekoppelten Wicklung.
Die Steuereinheit legt eine Offsetspannung zu der Spannung über der an die Spule gekoppelten Wicklung an, um diese Spannung in einen positiven Bereich anzuheben. Die Offsetspannung wird nur während der Ausschaltphase des ersten Schalters angelegt.

Es ist vorgesehen, dass die Steuereinheit die Spannung über der an die Spule gekoppelten Wicklung über einen Analog-Digital-Wandler überwacht. Vorzugsweise bestimmt die Steuereinheit anhand der Spannung über der an die Spule gekoppelten Wicklung die Spannung über der LED während der Ausschaltphase.

In einer bevorzugten Ausführungsform der Erfindung ist die erste Sensoreinheit ein Messwiderstand (Shunt).
Die zweite Sensoreinheit ist eine induktiv an die Spule gekoppelte Sekundärwicklung.

Weitere bevorzugte Ausführungsformen und Weiterbildungen der Erfindung sind Gegenstand weiterer Unteransprüche.
Die vorliegende Erfindung wird nachfolgend anhand bevorzugter Ausführungsbeispiele unter Bezugnahme auf die beigefügten Zeichnungen näher beschrieben.
Figur 1a zeigt eine Schaltungsanordnung gemäß dem bekannten Stand der Technik
Figur 1b zeigt ein Diagram mit dem zeitlichen Verlauf des LEDstroms in der Schaltungsanordnung von Figur 1a (Stand der Technik) Figur 2a zeigt ein erstes Beispiel einer Betriebsschaltung (Buck) für LEDs
Figur 3 und Figur 4 zeigen weitere Schaltungen
Figur 5 zeigt eine Abwandlung der Schaltung von Figur 2a (Buck-Boost)
Figur 6 zeigt eine weitere Schaltung
Figur 7 zeigt eine Ausführungsform der Erfindung

Figur 1a und Figur 1b zeigen den Stand der Technik.

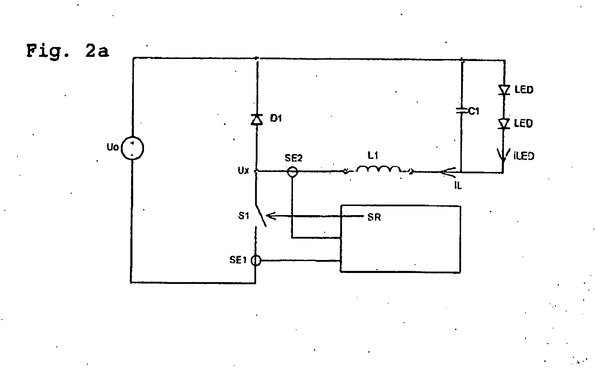

Die in Figur 2a dargestellte Schaltungsanordnung dient zum Betrieb von wenigstens einer (oder mehrerer in Serie und/oder parallel geschaltenen) LED. Im dargestellten Beispiel sind beispielsweise zwei LEDs in Serie geschaltet, es können natürlich auch nur eine oder auch mehrere LEDs sein. Die LED bzw. die seriell und/oder parallel geschalteten LEDs werden im Folgenden auch LED-strecke genannt. Ein Vorteil der vorliegenden Erfindung ist, dass sich die Betriebsschaltung sehr flexibel an die Art und Anzahl der seriell verbundenen LEDs anpasst. Der Schaltung wird eine Gleichspannung U0 zugeführt, die natürlich auch eine gleichgerichtete Wechselspannung sein kann. Die LEDs sind in Serie mit einer Spule L1 und einem ersten Schalter S1 verbunden.

Zudem weist die Schaltungsanordnung eine Diode D1 (die Diode D1 ist parallel zu den LEDs und der Spule L1 geschaltet) und einen zu den LEDs parallel geschalteten Kondensator C1 auf. Im eingeschalteten Zustand des ersten Schalters S1 fließt Strom durch die LEDs und durch die Spule L1, die dadurch magnetisiert wird. Im ausgeschaltenen Zustand des ersten Schalters S1 entlädt sich die im Magnetfeld der Spule gespeicherte Energie in Form eines Stroms über die Diode D1 und die LEDs. Parallel dazu wird am Beginn des Einschaltens des ersten Schalters S1 der Kondensator C1 geladen.

Während der Ausschaltphase des ersten Schalters S1 (Freilaufphase) entlädt sich der Kondensator C1 und trägt zum Stromfluss durch die LED-strecke bei. Bei geeigneter Dimensionierung des Kondensators C1 führt dies zu einer Glättung des Stroms durch die LEDs.

Als erster Schalter S1 wird vorzugsweise ein Feldeffekttransistor oder auch Bipolartransistor verwendet. Der erste Schalter S1 wird hochfrequente geschaltet, typischerweise in einem Frequenzbereich von über 10 kHz.

Ein Vorteil der Erfindung ist, dass der erste Schalter S1 im Betrieb geschont wird, da er, wie später ausgeführt, vorzugsweise dann eingeschaltet wird, wenn die an ihm anliegende Leistung nahezu null ist.

In der Schaltung von Figur 2a ist weiters eine Steuer- und/oder Regeleinheit SR vorgesehen, die zur Regelung der LED-leistung die Taktung des ersten Schalters S1 vorgibt.

Die Steuer/Regeleinheit SR verwendet zur Festlegung des genauen Einschalt- und Ausgangszeitpunkts des ersten Schalters S1 als Eingangsgrößen Signale von einer ersten Sensoreinheit SE1 und/oder Signale von einer zweiten Sensoreinheit SE2.

Die erste Sensoreinheit SE1 ist in Serie zum ersten Schalter S1 angeordnet und erfasst den Stromfluss durch den ersten Schalter S1. Dies dient zur Überwachung des Stromflusses durch den ersten Schalter S1. Übersteigt der Stromfluss durch den ersten Schalter S1 einen bestimmten maximalen Referenzwert, so wird der erste Schalter S1 ausgeschaltet. In einer vorteilhaften Ausführungsform kann es sich bei der ersten Sensoreinheit SE1 beispielsweise um einen Messwiderstand (Shunt oder Strommesswiderstand) handeln.

Zur Überwachung des Stromflusses kann nun der Spannungsabfall am Messwiderstand (Shunt) abgegriffen werden und beispielsweise mittels eines Komparators mit einem Referenzwert verglichen werden. Überschreitet der Spannungsabfall am Messwiderstand (Shunt) einen bestimmten Wert, so wird der erste Schalter S1 abgeschaltet.

Die zweite Sensoreinheit SE2 ist innerhalb des Stromzweiges, der während der Freilaufphase vom Strom durchflossen wird, angeordnet, vorzugsweise in der Nähe oder an der Spule L1.

Mit Hilfe der zweiten Sensoreinheit SE2 kann die Steuereinheit/Regeleinheit SR einen geeigneten Zeitpunkt für den Einschaltzeitpunkt des ersten Schalters S1 festlegen.

Zur Detektion des vorteilhaften Einschaltzeitpunkts für den ersten Schalter S1 dient nun eine zweite Sensoreinheit SE2.
In einer ersten Ausführungsform kann beispielsweise der Strom i_L durch die Spule L1 erfasst werden. Dies erfordert aber relativ aufwendige Schaltungen. Der Strom i_L durch die Spule L1 kann beispielsweise mittels eines Hallsensors erfasst werden.

Zusätzlich oder alternativ können daher weitere/andere Größen herangezogen werden, die zur Detektion eines vorteilhaften Einschaltzeitpunkts geeignet sind. In einer weiteren vorteilhaften Ausführungsform kann beispielsweise der Magnetisierungszustand der Spule L1 erfasst werden. Es kann sich bei der zweiten Sensoreinheit SE2 beispielsweise um eine Sekundärwicklung L2 an der Spule L1 handeln, die die Spannung an der Spule L1 abgreift. Die Überwachung des zeitlichen Spannungsverlaufs an der Spule L1 ermöglicht eine Aussage über den vorteilhaften Wiedereinschaltzeitpunkts des ersten Schalters S1.

Anstatt oder ergänzend zur Spannungsüberwachung an der Spule L1 kann beispielsweise die Spannung am Knotenpunkt Ux oberhalb des ersten Schalters S1 überwacht werden.

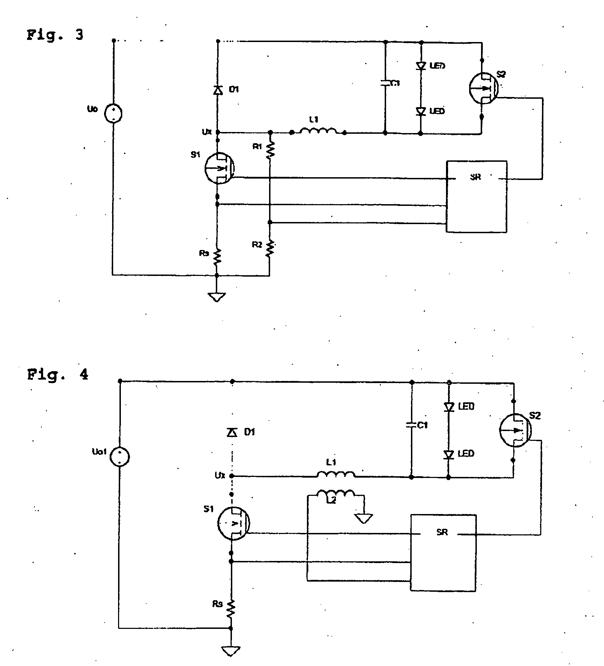

Die Steuer/Regeleinheit SR verwendet die Information von der ersten Sensoreinheit SE1 und/oder der zweiten Sensoreinheit SE2 zur Festlegung des Aus- und Einschaltzeitpunkts des ersten Schalters S1.
Die Regelung der (zeitlich gemittelten) LEDleistung durch SR kann beispielsweise in Form von PWM-Signalen erfolgen. Die Frequenz des PWM Signals liegt typischerweise in der Größenordnung von 100 - 1000 Hz. Figur 3 und Figur 4 zeigen weitere Schaltungen.

In Figur 3 ist eine Ausgestaltung der oben beschriebenen Schaltanordnung (eines Tiefsetzstellers bzw. Buck-Converter) dargestellt. Der vorteilhafte Ausschaltzeitpunkt wird hierbei mittels Erfassung der Spannung am Knotenpunkt Ux oberhalb des ersten Schalters S1 detektiert. Diese erfolgt durch den ohmschen Spannungsteiler R1 und R2. Der Knotenpunkt Ux liegt zwischen der Spule L1, der Diode D1 und dem ersten Schalter S1.

Als Spannungsteiler ist beispielsweise auch ein kapazitiver Spannungsteiler oder kombinierter Spannungsteiler, der aus Widerstand und Kapazität aufgebaut ist, möglich. Der Messwiderstand (Shunt) RS dient zur Stromerfassung durch den ersten Schalter S1. Die Überwachung des zeitlichen Spannungsverlaufs am Knotenpunkt Ux (insbesondere des 'Einbruchs' kurz nach Sperren der Diode D1 in der Nähe des Zeitpunkts t_2) ermöglicht eine Aussage über den vorteilhaften Wiedereinschaltzeitpunkt des ersten Schalters S1.

Anstatt oder ergänzend zu einer Spannungsüberwachung an der Spule L1 kann beispielsweise die Spannung am Knotenpunktes Ux oberhalb des ersten Schalters S1 überwacht werden. Die Spannung am Knotenpunkt Ux fällt beim Sperren der Diode von einem hohen Wert signifikant ab auf einen niedrigen Wert.

Das Signal zum Wiedereinschalten des ersten Schalters S1 kann daher bei Unterschreiten der Spannung Ux unter einem gewissen Schwellwert ausgelöst werden.

In der Schaltungsanordnung von Figur 3 ist zusätzlich ein zweiter Schalter S2 parallel zu den LEDs und dem Kondensator C1 angeordnet.

Der zweite Schalter S2 ist selektiv/unabhängig ansteuerbar und kann beispielsweise ein Transistor (MOSFET oder Bipolartransistor) sein. Wird der zweite Schalter S2 geschlossen, so wird der Entladevorgang des Kondensators C1 beschleunigt. Durch die beschleunigte Entladung des Kondensators C1 wird erreicht, dass der Stromfluss durch die LED möglichst schnell gegen null geht.
Dies ist beispielsweise am Ende eines PWM-Pakets erwünscht, wo der Stromfluss durch die LED möglichst schnell abfallen soll d.h. die abfallende Flanke des Stromsverlaufs möglichst steil sein soll (aus Gründen der Farbkonstanz).
Vorzugsweise kann der zweite Schalter S2 bei niedrigem Dimmlevel aktiviert und angesteuert werden, wo die PWM-Pakete sehr kurz sind und es wichtig ist, dass der Strom durch die LED am Ende eines Pulspakets rasch gegen null geht. Beispielsweise kann durch geeignete Ansteuerung des zweiten Schalters S2 ein noch niedrigeres Dimmlevel erreicht werden.

Eine weitere Funktion dieses zweiten Schalters S2 ist, dass er im eingeschalteten Zustand die LEDs überbrückt. Dies ist beispielsweise erforderlich, wenn die LEDs ausgeschaltet werden sollen, d.h. kein Licht emittieren sollen, aber die Versorgungsspannung U0 noch anliegt. Ohne die Überbrückung durch den zweiten Schalter S2 würde ein (zwar kleiner) Strom über die LEDs und die Widerstände R1 und R2 fließen und die LEDs (geringfügig) leuchten.

Es sei angemerkt, dass die-Anordnung eines zweiten Schalters S2 parallel zu den LEDs und dem Kondensator C1 zur beschleunigten Entladung des Kondensators C1 bzw. zur Überbrückung der LED nicht nur auf die spezielle Schaltungsanordnung von Figur 3 beschränkt ist, sondern bei allen Ausführungsformen der Erfindung angewandt werden kann.

Figur 4 zeigt eine Modifikation von der Schaltung in Figur 3 dahingehend, dass die Spannungsüberwachung an der Spule L1 erfolgt. Die Spannung an der Spule L1 kann beispielsweise mittels einer Sekundärwicklung L2, die an die Spule L1 gekoppelt ist (bzw eine zusätzliche Spule L2, die induktiv an die Spule L1 koppelt), erfasst werden.

Zur Detektion des vorteilhaften Einschaltzeitpunkts für den ersten Schalter S1 dient nun eine Sekundärwicklung L2.

Die Überwachung des zeitlichen Spannungsverlaufs an der Spule L1 (insbesondere des 'Einbruchs' kurz nach Sperren der Diode D1 nach dem Zeitpunkt t_2) ermöglicht eine Aussage über den vorteilhaften Wiedereinschaltzeitpunkt des ersten Schalters S1.

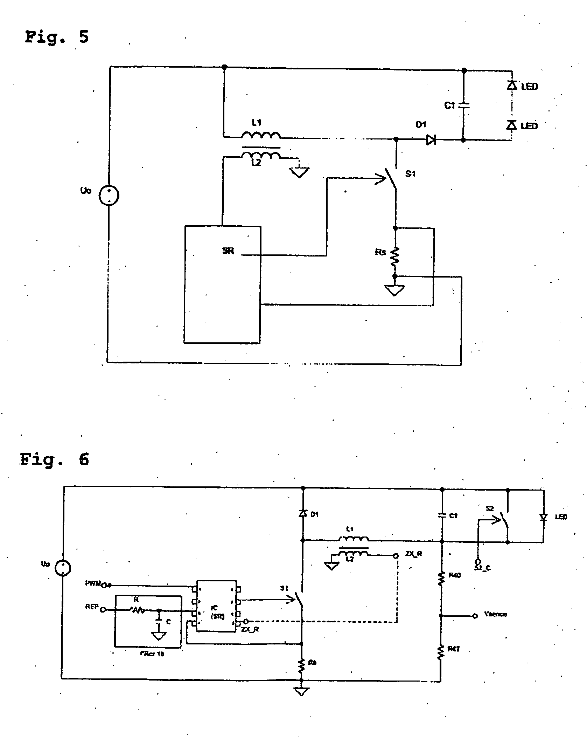

Es sei bemerkt, dass das Verfahren zur Detektion eines vorteilhaften Einschaltzeitpunkts für den ersten Schalter S1 natürlich auf andere Schaltungstopologien angewandt werden kann, so beispielsweise für einen sogenannten Sperrwandler bzw. Buck-Boost Converter oder einen sogenannten Durchflusswandler bzw. Forward Converter. Figur 5 zeigt eine Modifikation der Schaltung von Figur 2a dahingehend, dass die Anordnung der Drossel L1, der Diode D1 sowie die Orientierung der LED-strecke modifiziert ist (bildet Sperrwandler bzw. Buck-Boost Converter).

Eine weitere Schaltung ist in Fig. 6 dargestellt.
Der Steuerschaltkreis IC verfügt über einen Ausgang zur Ansteuerung eines Schalters und über weitere Überwachungseingänge. Ein erster dieser Überwachungseingänge kann für die Vorgabe eines Referenzwertes wie bspw. einer Referenzspannung genutzt werden.

Ein zweiter Überwachungseingang kann für die Überwachung des Erreichens einer maximalen Spannung oder auch anhand einer Spannungsmessung an einem Widerstand zur Überwachung des Erreichens eines maximalen Stromes genutzt werden.

Ein dritter Überwachungseingang kann für die Überwachung einer weiteren Spannung oder auch zur Aktivierung und Deaktivierung des Steuerschaltkreis IC oder der Ansteuerung den Steuerschaltkreis IC angesteuerten Schalters genutzt werden.

Gemäß der Fig. 6 überwacht der Steuerschaltkreis IC den Strom durch den ersten Schalter S1 während der Einschaltphase des ersten Schalters S1 über den Meßwiderstand (Shunt) Rs und den Eingang 4 am Steuerschaltkreis IC. Sobald die Spannung, die über dem Meßwiderstand (Shunt) Rs abgegriffen wird, einen bestimmten Maximalwert erreicht, wird der erste Schalter S1 geöffnet. Die Vorgabe der zum Öffnen des ersten Schalters S1 erforderlichen Höhe der Spannung kann durch die Vorgabe eines Referenzwertes (d.h. einer Referenzspannung) am Eingang 3 des Steuerschaltkreis IC angepasst werden. Beispielsweise kann von einem Microcontroller eine Referenzspannung vorgegeben werden, die die Höhe der maximal über dem Meßwiderstand (Shunt) Rs zulässigen Spannung und damit den maximal durch den ersten Schalter S1 zulässigen Strom vorgibt. Beispielweise kann der Microcontroller ein PWM-Signal ausgeben, dass dann durch ein Filter 10 geglättet wird (beispielsweise ein RC-Glied) und somit als Gleichspannungssignal mit einer bestimmten Amplitude an dem Eingang 3 des Steuerschaltkreis IC anliegt. Durch Änderung des Tastverhältnisses des PWM-Signales des Microcontrollers kann die Amplitude des Signales am Eingang 3 des Steuerschaltkreis IC angepasst werden.

Der Steuerschaltkreis IC kann über den Eingang 5 anhand der Überwachung der Spannung an einer auf der Spule L1 aufgebrachten Sekundärwicklung L2 das Erreichen der Entmagnetisierung der Spule L1 erkennen. Diese Erkennung kann als Wiedereinschaltsignal genutzt werden. Sobald die Entmagnetisierung der Spule L1 durch den Steuerschaltkreis IC erkannt wurde, kann der Steuerschaltkreis IC den ersten Schalter S1 durch die Ansteuerung über den Ausgang 7 einschalten.

Der Steuerschaltkreis IC kann durch Anlegen einer Spannung am Eingang 1 aktiviert und / oder auch deaktiviert werden. Diese Spannung zum Aktivieren am Eingang 1 kann auch zwischen einen Hoch- und einem Tiefpegel wechseln, wobei bei Hochpegel der Steuerschaltkreis IC aktiviert wird und bei Tiefpegel zumindest die Ansteuerung des ersten Schalters S1 unterbricht.
Diese Ansteuerung des Eingangs 1 kann durch einen Microcontroller erfolgen. Beispielsweise kann auf diese Weise eine niederfrequente Aktivierung und Deaktivierung des Steuerschaltkreis IC und somit der Ansteuerung des ersten Schalters S1 erreicht werden und somit die niederfrequente Ansteuerung des Betriebsschaltung zum Dimmen der LED. Über den Eingang 1 kann über die Amplitude des an diesem Eingang anliegenden Signales weiterhin auch eine weitere Referenzspannung für den Steuerschaltkreis IC vorgegeben werden. Diese Spannung kann beispielsweise auch die Höhe des maximal zulässigen Stromes durch den Schalter beeinflussen oder aber auch die zulässige Einschaltdauer des ersten Schalters S1. Der Steuerschaltkreis IC und/oder der Steuerschaltkreis IC kombiniert mit dem Microcontroller können gemeinsam die Steuereinheit SR bilden.

Die Einschaltdauer des ersten Schalters S1 kann auch von einer weiteren Spannungsmessung innerhalb der Betriebsschaltung abhängig sein. Beispielweise kann dem Steuerschaltkreis IC auch eine Spannungsmessung Vsense zugeführt werden.
Über diese Spannungsmessung kann über einen Spannungsteiler R40/ R47 beispielweise eine Überwachung oder auch Messung der Spannung am Knotenpunkt zwischen Spule L1 und LED erfolgen.
Diese Spannungsmessung Vsense kann entweder einem weiteren Eingang des Steuerschaltkreises IC, als zusätzliche Größe additiv einem bereits belegten Eingang des Steuerschaltkreis IC oder auch einem Eingang des Microcontrollers zugeführt werden.

Somit kann ein System aufgebaut werden, bei dem zum einen eine einfache Ansteuerung zum Dimmen von LED durch niederfrequente PWM ermöglicht wird, zum anderen ein möglichst verlustarmer hochfrequenter Betrieb des Betriebsgerätes kombiniert mit einem möglichst konstanten Strom durch die LED. Es kann durch einen Microcontroller sowohl die Frequenz als auch das Tastverhältnis eines PWM-Singales zum Dimmen von LED vorgegeben werden, daneben kann auch die Höhe des maximal zulässigen Stromes durch den ersten Schalter S1 vorgegeben werden. Der Microcontroller kann über ein Signal, welches an den Eingang 1 des Steuerschaltkreis IC geführt wird, das Dimmen der LED durch niederfrequente PWM steuern. Weiterhin kann der Microcontroller über ein Signal, welches an den Eingang 3 des Steuerschaltkreis IC geführt wird, die Höhe des maximal zulässigen Stromes durch den ersten Schalter S1 oder auch die notwendige Einschaltdauer des ersten Schalters S1 vorgegeben.

Die Betriebsschaltung kann weiterhin einen weiteren Schalter S2 enthalten, der so angeordnet ist, dass dieser zweite Schalter S2 die LED überbrücken kann.

Der zweite Schalter S2 kann weiterhin so angeordnet sein, dass er den Strom durch einen vorhandenen hochohmigen Spannungsmesspfad oder eine ähnliche vorhandene hochohmige Schaltungsanordnung von der LED übernehmen oder diesen unterbrechen kann.

Durch Parallelschaltung des zweiten Schalters S2 zu den LED kann dieser die LED überbrücken und somit deaktivieren. Dieses Verfahren kann zum Einstellen der Helligkeit (Dimmen) der LED genutzt werden. Eine mögliche Variante wäre, dass das Dimmen über den zweiten Schalter S2 erfolgt, während über die Ansteuerung des ersten Schalters S1 nur der Strom durch die LED eingestellt und geregelt wird.
Es kann aber die Ansteuerung der beiden Schalter S1 und S2 für eine optimierte Dimmansteuerung kombiniert genutzt werden.
So kann beispielsweise der zweite Schalter S2 nur für das Dimmen auf niedrige Dimmlevel zusätzlich genutzt werden. Die Betriebsschaltung ist aufgrund der vorhandenen Topologie und der Regelschaltung so ausgelegt, dass die Ausgangsspannung der Betriebsschaltung (d.h. die Spannung über der LED) auf einen maximal zulässigen Wert begrenzt wird. Wird durch Schließen des zweiten Schalters S2 die LED überbrückt, dann begrenzt die Betriebsschaltung die Ausgangsspannung derart, dass kein überhöhter Strom fließen kann, der zu einer möglichen Zerstörung führen kann. Diese Ansteuerung des zweiten Schalters S2 kann beispielsweise nur für das Dimmen auf niedrige Dimmlevel genutzt werden.

Wenn der Tiefsetzsteller (Buck-Converter) fix auf Stromquellenbetrieb (im sogenannten Hysteritischen Modus wie in den Beispielen beschrieben) arbeitet und effizient läuft, können die LED einzig mit zweiten Schalter S2, der sehr niederohmig sein sollte, gedimmt werden, und die Verluste sind trotzdem gering.

Zusätzlich kann der zweite Schalter S2 so angesteuert werden, dass er den Strom durch einen vorhandenen hochohmigen Spannungsmesspfad oder eine ähnliche vorhandene hochohmige Schaltungsanordnung von der LED übernehmen kann.

Wenn beispielsweise gemäß Fig. 6 der erste Schalter S1 nicht getaktet wird, sollte kein Strom durch die LED fließen. Aufgrund des vorhandenen Spannungsteilers R40/ R47 kann jedoch ein geringer Strom durch die LED fließen. In diesem Fall kann bei einer gewünschten Deaktivierung der LED (beispielsweise wenn kein Licht abgegeben werden soll) der zweite Schalter S2 geschlossen werden, damit der Stromfluß durch die LED unterbrochen oder vermieden wird.
Der zweite Schalter S2 wird zumindest immer im Anschluss an ein niederfrequentes PWM-Paket angesteuert, um die LED zu überbrücken bzw. zu desaktivieren.

Eine Unterbrechung des Stromes durch die LED kann auch durch Anordnung des zweiten Schalters S2 in Serie mit den LED erfolgen.

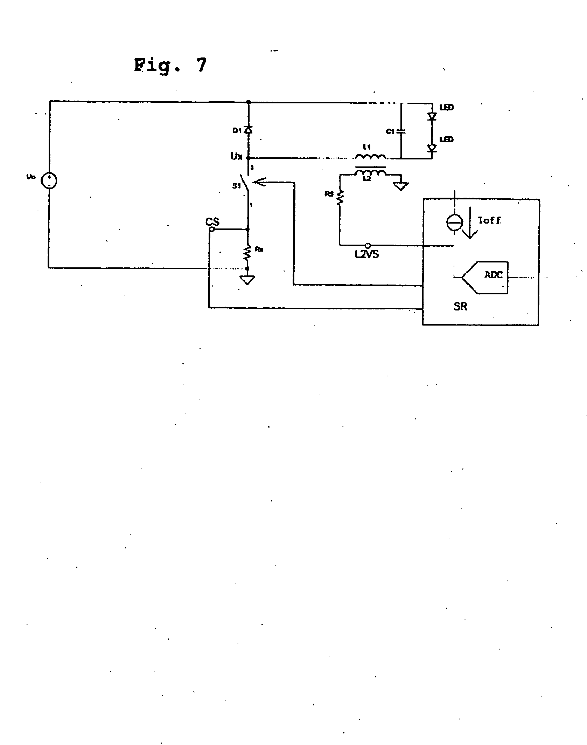

Eine Ausführungsform der Erfindung ist in Fig. 7 dargestellt.
Der Betriebsschaltung für wenigstens eine LED wird eine Gleichspannung oder gleichgerichtete Wechselspannung zugeführt. Mittels einer Spule L1 und einem durch eine Steuereinheit SR getakteten Schalter S1 wird eine Versorgungsspannung für wenigstens eine LED bereitgestellt, wobei bei eingeschaltetem (ersten) Schalter S1 in der Spule L1 eine Energie zwischengespeichert wird, die sich bei ausgeschaltetem Schalter S1 über wenigstens eine LED entlädt. Die Betriebsschaltung kann so gesteuert werden, daß die Steuereinheit SR die Zeitdauer toff zwischen einem Ausschalten und einem folgenden Einschalten des Schalters S1 abhängig von der Spannung über der Spule L1 bestimmt.

Dabei bestimmt die Steuereinheit SR die Spannung über die Spule L1 mittels einer induktiv (transformatorisch) an die Spule L1 gekoppelten Wicklung L2.

Dabei legt die Steuereinheit SR eine Offsetspannung zu der Spannung über der an die Spule L1 gekoppelten Wicklung L2 an, um diese Spannung in einen positiven Bereich anzuheben. Die Steuereinheit SR kann die Spannung über der an die Spule L1 gekoppelten Wicklung L2 über einen Analog-Digital-Wandler ADC überwachen.

Die Steuereinheit SR legt eine Offsetspannung zu der Spannung über der an die Spule L1 gekoppelten Wicklung L2 nur während der Ausschaltphase des Schalters S1 an, um diese Spannung in einen positiven Bereich anzuheben.
Die Steuereinheit SR kann anhand der Spannung der Wicklung L2, die an die Spule L1 gekoppelt ist, die Spannung über der LED während der Ausschaltphase bestimmen. Während der Ausschaltphase ist die Diode D1 durchgeschaltet (leitend), so dass über ihr nur eine zu vernachlässigende Spannung von ca. 0,7 V abfällt. Die Spannung über der Spule L1 unterscheidet sich nur um die über der Diode D1 abfallende Spannung von der Spannung über den LED. Es kann somit entweder unter Vernachlässigung der Diode D1 abfallende Spannung oder unter Beachtung der der Diode D1 abfallende Spannung auf die Spannung über den LED geschlossen werden.
Anhand der somit bekannten Spannung über den LED kann auf den Strom durch die LED geschlossen werden.

Die an die Spule L1 gekoppelten Wicklung L2 bildet also eine zweite Sensoreinheit SE2. Die Spannung über der Spule L1 kann mittels einer zweiten Sensoreinheit SE2 (also über der an die Spule L1 gekoppelten Wicklung L2) überwacht werden.

Die zweite Sensoreinheit SE2 kann zusätzlich das Erreichen der Entmagnetisierung der Spule L1 beziehungsweise den Nulldurchgang des Spulenstromes erkennen, indem sie die Spannung über der an die Spule L1 gekoppelten Wicklung L2 überwacht.

Die Ausführungsform gemäß Figur 7 ist dadurch gekennzeichnet, dass die Spannung über der Spule L1 transformatorisch aus der Spule L1 mit einer zweiten Wicklung L2 ausgekoppelt und der Steuereinheit SR zugeführt wird.

Über die Wicklung L2, die an die Spule L1 magnetisch gekoppelt ist, wird die Spannung über der Spule L1 transformatorisch ausgekoppelt. Zusätzlich kann in der Einschaltphase des Schalters S1 der Spannungsabfall über dem Shuntwiderstand Rs überwacht werden, der den Spulenstrom repräsentiert.

In der Ausschaltphase wird dann (über einen Pin L2VS) Spannung über der Spule L1 erfasst, die transformatorisch aus der Spule L1 ausgekoppelt wird. Über die Spannung der Spule L1 wird bei Kenntnis der Spulengröße (Induktivität der Spule L1) auch der Spulenstrom errechnet und somit auf den Strom durch die LED geschlossen. Dementsprechend ist eine direkte Messung des Stroms durch die LED entbehrlich. Eine solche Messung ist sehr aufwendig, da die LED nicht gegen Masse verschaltet sind und somit eine Messung über einen einfachen Stromshunt (Strommesswiderstand) nicht möglich ist.

Die Steuereinheit SR ist in einem Steuerschaltkreis IC enthalten.

Es kann aber für den Betrieb der Steuereinheit SR (beispielsweise eines Steuer-IC oder ASIC) ungünstig sein, wenn dem Eingangspin L2VS eine negative Spannung zugeführt wird.

Aus diesem Grunde wird dem Eingangspin L2VS außerdem noch ein Offsetstrom Ioff zugeführt, um das Potential am Eingangspin L2VS anzuheben. Vorzugsweise wird der Offsetstrom Ioff intern innerhalb der Steuereinheit SR erzeugt und auch intern dem Eingangspin L2VS zugeführt.

Die Steuereinheit SR weist intern einen Digitalteil auf. Die Erfassung einzelner Signale oder Messwerte kann über Analog-Digital-Wandler erfolgen und somit die erfassten Signale beziehungsweise Messwerte im Digitalteil verarbeitet werden.
Über einen oder mehrere Digital-Analog-Wandler kann dann wieder ein Ansteuersignal oder eine Initiierung eines Ansteuersignals ausgegeben werden (beispielsweise zur Ansteuerung des Schalters S1).

Die Überwachung der Spannung über der Spule L1 wird erfindungsgemäß bei einem sogenannten nichtlückenden Strombetrieb der Schaltung (insbesondere des Schalters S1) angewendet. Somit verläuft Strom durch die Drossel L1 sägezahnförmig um einen Mittelwert, entweder, ohne auf Null abzusinken (nichtlückender Strombetrieb).
Der Kondensator C1 parallel zu dem LED-Lastkreis kann sehr klein sein oder auch ganz weggelassen werden, vorzugsweise bei einem Betrieb im nichtlückenden Strombetrieb.

Diese Schaltung gemäß Figur 7 kann auch dazu dienen, während der Ausschaltphase den Nulldurchgang des Spulenstromes beziehungsweise das Erreichen der Entmagnetisierung der Spule L1 zu ermitteln.

Die Kenntnis des Nulldurchganges (also das Erreichen der Entmagnetisierung der Spule L1) ist vorteilhaft, weil man den Zeitpunkt des Wiedereinschaltens des Schalters S1 gerne in diesen Nulldurchgang legt. Dadurch können Schaltverluste vermieden werden, und der Schalter wird thermisch weniger belastet. Es kann somit in der Einschaltphase des Schalters S1 der Spannungsabfall über dem Shuntwiderstand Rs ermittelt werden, und in der Ausschaltphase kann über die Wicklung L2 die Spannung der Spule L1 ermittelt werden.

Die Schaltung gemäß Figur 7 kann genauso wie die Ausführungsbeispiele der Figuren 3, 4 und 6 um einen zweiten Schalter S2 erweitert werden, der die gleiche Funktionalität, wie anhand der Figuren 3, 4 und 6 beschrieben wurde, aufweisen kann.

Das Ausführungsbeispiel der Fig. 7 kann um Merkmale der anderen Ausführungsbeispiele erweitert werden, um die Funktionalität der Betriebsschaltung zu erweitern, insbesondere um den zweiten (weiteren) Schalter S2.

Die Steuereinheit SR kann auch wie bereits erwähnt in einem Steuerschaltkreis IC enthalten sein. Der Steuerschaltkreis kann beispielsweise zum Dimmen in der gleichen Weise wie bei dem Ausführungsbeispiel nach Figur 6 angesteuert werden (vorzugsweise über einen Microcontroller).
Das Beispiel der Fig. 7 (und die anderen natürlich auch) kann dahingehend erweitert werden, dass mehrere Betriebsschaltungen gemäß Figur 6 vorhanden sind. Die Steuerschaltkreise IC bzw. die Steuereinheiten SR der einzelnen Betriebsschaltungen werden von einem gemeinsamen Microcontroller aus angesteuert.

Die einzelnen Betriebsschaltungen können beispielsweise LED-Stränge unterschiedlicher Wellenlänge oder Farbe ansteuern. Die Ansteuerung des Microcontrollers kann über eine Schnittstelle (drahtlos oder leitungsgebunden) erfolgen. Dabei können Steuersignale zum Einstellen der Helligkeit oder Farbe oder auch Statusinformationen über die Schnittstelle übertragen werden.

Auf diese Weise kann eine LED Beleuchtungseinheit aufweisend eine oder mehrere erfindungsgemäße Betriebsschaltungen aufgebaut werden, die bei sehr hohem Wirkungsgrad sehr kompakt und unter einem geringen Bauteilbedarf aufgebaut werden kann.

## Patentansprüche

1. Betriebsschaltung für wenigstens eine LED, der eine Gleichspannung oder gleichgerichtete Wechselspannung zugeführt wird, und die mittels einer Spule (L1) und einem durch eine Steuereinheit (SR) getakteten ersten Schalter (S1) eine Versorgungsspannung für wenigstens eine LED bereitstellt, wobei bei eingeschaltetem ersten Schalter (S1) in der Spule (L1) eine Energie zwischengespeichert wird, die sich bei ausgeschaltetem ersten Schalter (S1) über wenigstens eine LED entlädt,
wobei der Strom durch die Spule (L1) sägezahnförmig um einen Mittelwert verläuft, ohne auf Null abzusinken,
wobei die Steuereinheit (SR) eingerichtet ist, um die Zeitdauer toff zwischen einem Ausschalten und einem folgenden Einschalten des ersten Schalters (S1) abhängig von der Spannung über der Spule (L1) zu bestimmen,
**dadurch gekennzeichnet,**
**dass** die Steuereinheit (SR) eingerichtet ist, um eine Spannung über die Spule (L1) mittels einer induktiv an die Spule (L1) gekoppelten Wicklung (L2) zu überwachen,
**dass** die Steuereinheit (SR) eingerichtet ist, um aus der Spannung über die Spule (L1) und einer Induktivität der Spule (L1) den Strom durch die Spule (L1) zu errechnen und auf den Strom durch die wenigstens eine LED zu schließen, und
**dass** die Steuereinheit (SR) eine Offsetspannung zu der Spannung über der an die Spule (L1) gekoppelten Wicklung (L2) nur während der Ausschaltphase des ersten Schalters (S1) anlegt, um diese Spannung in einen positiven Bereich anzuheben.

2. Betriebsschaltung nach Anspruch 1, **gekennzeichnet dadurch, dass** die Steuereinheit (SR) die Spannung über der an die Spule (L1) gekoppelten Wicklung (L2) über einen Analog-Digital-Wandler (ADC) überwacht.

3. Betriebsschaltung nach Anspruch 1 oder Anspruch 2, **gekennzeichnet dadurch, dass** die Steuereinheit (SR) anhand der Spannung über der an die Spule (L1) gekoppelten Wicklung (L2) die Spannung über der LED während der Ausschaltphase bestimmt.

4. Betriebsschaltung nach einem der vorangehenden Ansprüche, **gekennzeichnet dadurch, dass** die Wicklung (L2), die an die Spule (L1) gekoppelt ist, eine zweiten Sensoreinheit (SE2) bildet.

5. Betriebsschaltung nach einem der vorangehenden Ansprüche, aufweisend einen Steuerschaltkreis (IC), der die Steuereinheit (SR) enthält und über einen Eingang zur Überwachung der Spannung über die Spule (L1) mittels einer induktiv an die Spule (L1) gekoppelten Wicklung (L2) verfügt und abhängig von dieser Überwachung einen ersten Schalter (S1) ansteuert.

6. Betriebsschaltung nach einem der vorangehenden Ansprüche, aufweisend einen Microcontroller, der durch Anlegen einer Spannung an einem Eingang des Steuerschaltkreises (IC) diesen aktiviert und/oder deaktiviert und an einem weiteren Eingang eine Referenzspannung für den Steuerschaltkreis IC vorgibt.

7. Betriebsschaltung nach einem der vorangehenden Ansprüche, **gekennzeichnet durch** einen zweiten Schalter (S2), der parallel zu den LEDs angeordnet ist und unabhängig vom ersten Schalter (S1) ansteuerbar ist.

8. Verfahren zum Betreiben von wenigstens einer LED mittels einer Schaltreglerschaltung, der eine Gleichspannung oder gleichgerichtete Wechselspannung zugeführt wird wobei beim Einschalten eines Schalters (S1) in einer Spule (L1) eine Energie zwischengespeichert wird, die sich bei ausgeschaltetem Schalter (S1) über wenigstens eine LED entlädt,
wobei der Strom durch die Spule (L1) sägezahnförmig um einen Mittelwert verläuft, ohne auf Null abzusinken,
wobei die Zeitdauer toff zwischen einem Ausschalten und einem folgenden Einschalten des Schalters (S1) abhängig von der Spannung über der Spule (L1) bestimmt wird,
**dadurch gekennzeichnet,**
**dass** eine Spannung über die Spule (L1) mittels einer induktiv an die Spule (L1) gekoppelten Wicklung (L2) bestimmt wird,
**dass** aus der Spannung über die Spule (L1) und einer Induktivität der Spule (L1) der Strom durch die Spule (L1) errechnet und auf den Strom durch die wenigstens eine LED geschlossen wird, und
**dass** eine Offsetspannung zu der Spannung über der an die Spule (L1) gekoppelten Wicklung (L2) nur während einer Ausschaltphase des ersten Schalters (S1) angelegt wird, um diese Spannung in einen positiven Bereich anzuheben.

9. LED Beleuchtungsanlage aufweisend zumindest eine Betriebsschaltung für eine LED zum Ansteuern der LED gemäß einem Verfahren nach Anspruch 8.

## Claims

1. Operating circuit for at least one LED, which is supplied with a DC or rectified AC voltage, and which provides a supply voltage for at least one LED by means of a coil (L1) and a first switch (S1) that is clocked by a control unit (SR), whereby energy is stored temporarily in a coil (L1) when the first switch (S1) is switched on, and which is discharged through at least one LED when the first switch (S1) is switched off,
whereby the current passes through the coil (L1) in the form of a sawtooth about a mean value, without dropping to zero,
whereby the control unit (SR) is set up to determine the time t_{off} between a switching off and a subsequent switching on of the first switch (S1) as a function of the voltage across the coil (L1),
**characterized in that**
- the control unit (SR) is set up to monitor a voltage across the coil (L1) by means of a winding (L2) that is inductively coupled to the coil (L1),
- the control unit is set up (SR) to calculate the current passing through the coil (L1) from the voltage across the coil (L1) and an inductance of the coil (L1), and to so determine the current passing through the at least one; LED, and
- that the control unit (SR) applies an offset voltage to the voltage via the winding (L2) coupled to the coil (L1) only during the switched off phase of the first switch (S1) in order to raise this voltage into a positive area.

2. Operating circuit according to claim 1, **characterised in that** the control unit (SR) monitors the voltage across the winding (L2) coupled to the coil (L1) via an analog-to-digital converter (ADC).

3. Operating circuit according to claim 1 or claim 2, **characterised in that** the control unit (SR) determines the voltage across the LED during the deactivation phase based on the voltage across the winding (L2) coupled to the coil (L1).

4. Operating circuit according to one of the preceding claims, **characterised in that** the winding (L2) coupled to the coil (L1) forms a second sensor unit (SE2).

5. Operating circuit according to one of the preceding claims, comprising a control circuit (IC) containing the control unit (SR) and with an input for monitoring the voltage across the coil (L1) by means of a winding (L2) that is inductively coupled to the coil (L1) in order to control a first switch (S1) as a function of this monitoring.

6. Operating circuit according to one of the preceding claims, comprising a microcontroller which, by applying a voltage to an input of the control circuit (IC) activates and/or deactivates it, gives a reference voltage at a further input for the control circuit IC.

7. Operating circuit according to one of the preceding claims, **characterised in that** a second switch (S2) is arranged in parallel to the LEDs and can be controlled independently of the first switch (S1).

8. A method of operating at least one LED by means of a switching regulator circuit to which a DC voltage or rectified AC voltage is supplied, whereby energy is stored temporarily in a coil (L1) on switching on of a switch (S1), and that is discharged via at least one LED when the switch (S1) is switched off,
whereby the current passes through the coil (L1) in the form of a sawtooth about a mean value, without dropping to zero,
whereby the control unit (SR) is set up to determine the time t_{off} between a switching off and a subsequent switching on of the first switch (S1) as a function of the voltage across the coil (L1),
**characterised in that**
- a voltage across the coil (L1 is determined) by means of a winding (L2) that is inductively coupled to the coil (L1),
- the control unit is set up (SR) to calculate the current passing through the coil (L1) from the voltage across the coil (L1) and an inductance of the coil (L1) and to so determine the current passing through the at least one; LED, and
- that the control unit (SR) applies an offset voltage to the voltage via the winding (L2) coupled to the coil (L1) only during the switched off phase of the first switch (S1) in order to raise this voltage into a positive area.

9. LED illumination system comprising at least an operating circuit for an LED for the control of the LED according to a method according to claim 8.

## Revendications

1. Circuit d'exploitation pour au moins une LED auquel une tension continue ou une tension alternative redressée est amenée et qui fournit une tension d'alimentation pour au moins une LED au moyen d'une bobine (L1) et d'un premier commutateur (S1) cadencé par une unité de commande (SR), dans lequel lorsque le premier commutateur (S1) est activé, une énergie est stockée de façon intermédiaire dans la bobine (L1), laquelle énergie se décharge par le biais d'au moins une LED lorsque le premier commutateur (S1) est désactivé,
dans lequel le courant circule à travers la bobine (L1) en forme de dents de scie autour d'une valeur moyenne sans descendre à zéro,
dans lequel l'unité de commande (SR) est conçue pour déterminer la durée toff entre une désactivation et une activation suivante du premier commutateur (S1) en fonction de la tension à travers la bobine (L1),
**caractérisé**
**en ce que** l'unité de commande (SR) est conçue pour surveiller une tension à travers la bobine (L1) au moyen d'un enroulement (L2) couplé de façon inductive avec la bobine (L1),
**en ce que** l'unité de commande (SR) est conçue pour calculer le courant à travers la bobine (L1) à partir de la tension à travers la bobine (L1) et d'une inductance de la bobine (L1) et déduire le courant à travers l'au moins une LED, et
**en ce que** l'unité de commande (SR) applique uniquement une tension de décalage à la tension à travers l'enroulement (L2) couplé avec la bobine (L1) pendant la phase de désactivation du premier commutateur (S1) afin de relever cette tension à un niveau positif.

2. Circuit d'exploitation selon la revendication 1, **caractérisé en ce que** l'unité de commande (SR) surveille la tension à travers l'enroulement (L2) couplé avec la bobine (L1) par le biais d'un convertisseur analogique/numérique (ADC).

3. Circuit d'exploitation selon la revendication 1 ou la revendication 2, **caractérisé en ce que** l'unité de commande (SR) détermine la tension à travers la LED pendant la phase de désactivation sur la base de la tension à travers l'enroulement (L2) couplé avec la bobine (L1).

4. Circuit d'exploitation selon l'une des revendications précédentes, **caractérisé en ce que** l'enroulement (L2) qui est couplé avec la bobine (L1) forme une deuxième unité de détection (SE2).

5. Circuit d'exploitation selon l'une des revendications précédentes, présentant un circuit de commande (IC) qui contient l'unité de commande (SR) et dispose d'une entrée pour surveiller la tension à travers la bobine (L1) au moyen d'un enroulement (L2) couplé de façon inductive avec la bobine (L1) et commande un premier commutateur (S1) en fonction de cette surveillance.

6. Circuit d'exploitation selon l'une des revendications précédentes, présentant un microcontrôleur qui active et/ou désactive le circuit de commande (IC) en appliquant une tension à une entrée de celui-ci et qui prescrit au niveau d'une autre entrée une tension de référence pour le circuit de commande (IC).

7. Circuit d'exploitation selon l'une des revendications précédentes, **caractérisé par** un deuxième commutateur (S2) qui est agencé en parallèle aux LED et peut être commandé indépendamment du premier commutateur (S1).

8. Procédé destiné à faire fonctionner au moins une LED au moyen d'une commutation à régulateur de commutation à laquelle une tension continue ou une tension alternative redressée est amenée, dans lequel lorsqu'un commutateur (S1) est activé, une énergie est stockée de façon intermédiaire dans une bobine (L1), laquelle énergie se décharge par le biais d'au moins une LED lorsque le commutateur (S1) est désactivé, dans lequel le courant circule à travers la bobine (L1) en forme de dents de scie autour d'une valeur moyenne sans descendre à zéro,
dans la durée toff entre une désactivation et une activation suivante du commutateur (S1) est déterminée en fonction de la tension à travers la bobine (L1),
**caractérisé**
**en ce qu'**une tension à travers la bobine (L1) est déterminée au moyen d'un enroulement (L2) couplé de façon inductive avec la bobine (L1),
**en ce que** le courant à travers la bobine (L1) est calculé à partir de la tension à travers la bobine (L1) et d'une inductance de la bobine (L1) et le courant à travers l'au moins une LED est déduit, et
**en ce qu'**une tension de décalage est uniquement appliquée à la tension à travers l'enroulement (L2) couplé avec la bobine (L1) pendant une phase de désactivation du premier commutateur (S1) afin de relever cette tension à un niveau positif.

9. Installation d'éclairage à LED présentant au moins un circuit d'exploitation pour une LED destiné à commander la LED conformément à un procédé selon la revendication 8.
